(19)

Europäisches
Patentamt
European
Patent Office
Office européen
des brevets

(11)     **EP 2 620 585 B1**

(12)     **EUROPEAN PATENT SPECIFICATION**

(45) Date of publication and mention
of the grant of the patent:
**15.03.2017   Bulletin 2017/11**

(51) Int Cl.:
***E21B 33/035*** *(2006.01)*

(21) Application number: **12152684.2**

(22) Date of filing: **26.01.2012**

(54) **Communicaton in a subsea well control system**

Kommunikation in einem Kontrollsystem für ein Unterwasserbohrloch

Communication dans un système de contrôle de puits sous-marin

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.07.2013   Bulletin 2013/31**

(73) Proprietor: **GE Oil & Gas UK Limited
Nailsea
Bristol BS48 1BS (GB)**

(72) Inventors:
 • **Puchianu, Silviu
   Nailsea, Bristol BS48 1BS (GB)**
 • **Packham, Andrew
   Nailsea, Bristol BS48 1BS (GB)**

 • **Smart, Hilton
   Nailsea, Bristol BS48 1BS (GB)**
 • **Morley, Graham
   Nailsea, Bristol BS48 1BS (GB)**
 • **Davis, Julian
   Nailsea, Bristol BS48 1BS (GB)**

(74) Representative: **Page Hargrave
   Whitefriars
   Lewins Mead
   Bristol BS1 2NT (GB)**

(56) References cited:
   **WO-A1-2009/045110      US-A1- 2007 173 957
   US-A1- 2009 140 879      US-A1- 2011 137 471**

**Description**

Field of the Invention

This invention relates to communication in a subsea well control system, such as a control system for a subsea well hydrocarbon extraction facility.

Background of the Invention

In a communications and power system (CAPS) based subsea control well system (such as a subsea control system for a subsea well hydrocarbon extraction facility), the cost of the copper conductors, within an umbilical between a surface control platform and the subsea well complex, used for data communications becomes significant due to the long offsets.

US 2009/140879 A1 discloses a communication arrangement for a subsea well control system comprising an umbilical between a topside location and a subsea location in the form of a coaxial cable which uses an inner core and an outer tube for power transfer. Means are provided for transmitting and receiving data between said locations via the core and a return path for said data comprises a power line in said umbilical in that if a fault occurs, the core is used by switching the transmission system on to a power loop including the core in order to use part of the power line loop for redirecting data from sensor nodes to a surface recorder.

Summary of the Invention

According to the invention from one aspect, there is provided a communication arrangement for a subsea well control system, comprising an umbilical between a topside location and a subsea location, an electrical conductor in said umbilical and means for transmitting and receiving data between said locations via said conductor, wherein said conductor does not carry power in operation of the arrangement and a return path for said data comprises a power line in said umbilical. Typically, said means for transmitting and receiving data comprises:

first data supply means, at said topside location;

second data supply means, at said subsea location;

first data receiving means, at said topside location, for receiving data from said second data supply means via said umbilical; and

second data receiving means, at said subsea location, for receiving data from said first data supply means via said umbilical.

Such an arrangement could comprise first switching means, at said topside location, and second switching means, at said subsea location, the arrangement being such that, when said first data supply means transmits data to said second data receiving means, said second switching means connects said conductor to said power line and, when said second data supply means transmits data to said first data receiving means, said first switching means connects said conductor to said power line.

In this case, in one embodiment:

said first data supply means comprises a first direct current source and means for alternately switching said first switching means between a position in which it connects said first source to said conductor and a position in which it connects said conductor to said power line, in dependence on the data to be transmitted to the second receiving means; and

said second data supply means comprises a second direct current source and means for alternately switching said second switching means between a position in which it connects said second source to said conductor and a position in which it connects said conductor to said power line, in dependence on the data to be transmitted to the first receiving means.

In another embodiment, said first data supply means comprises a first data source and said second data supply means comprises a second data source, the arrangement being such that said first switching means connects said first source to said conductor for transmitting data to said second receiving means and said second switching means connects said second source to said conductor for transmitting data to said first receiving means. Each of said first and second sources could comprise a source of digital data or a source of modulated analogue data.

According to this invention from another aspect, there is provided a method of communication in a subsea well control system which comprises an umbilical between a topside location and a subsea location and an electrical conductor in said umbilical, said conductor not carrying power, the method comprising using means for transmitting and receiving data to transmit between said locations via said conductor and using a power line in said umbilical as a return path for said data.

Brief Description of the Drawings

Figs. 1 and 2 illustrate a first embodiment of the invention in two conditions;

Figs. 3 and 4 illustrate a second embodiment of the invention in two conditions; and

Figs. 5 and 6 illustrate a third embodiment of the invention in two conditions.

Detailed Description of the Invention

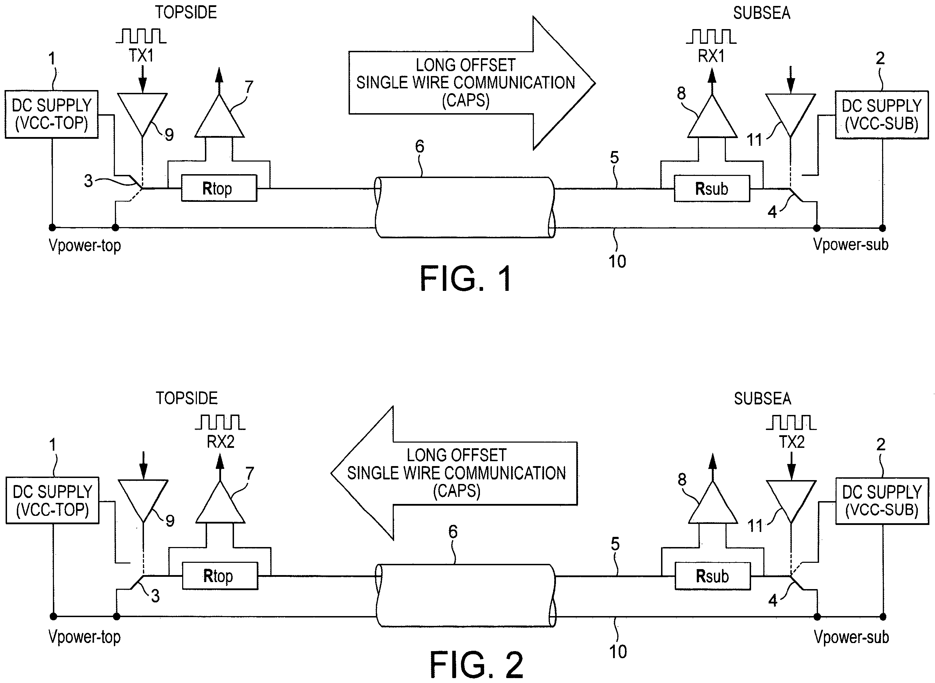

Referring first to Figs. 1 and 2, in a well control system (such as a control system for a subsea well hydrocarbon extraction facility), reference numeral 1 designates a direct current (DC) supply at a topside location for supplying a voltage VCC-TOP and reference numeral 2 designates a DC supply at a subsea location for supplying a voltage VCC-SUB. Reference numeral 3 designates a switch at the topside location and reference numeral 4 designates a switch at the subsea location. There is a long offset between supplies 1 and 2, there being between them an electrical conductor 5 in the form of a single wire in an umbilical 6 for transmitting communications between from the topside to subsea and vice-versa, the conductor 5 not carrying power.

Rtop designates a resistor at the topside location in series with conductor 5, across which resistor is an amplifier 7 for topside reception of data from the subsea location and Rsub designates a resistor at the subsea location in series with conductor 5 across which resistor there is an amplifier 8 for reception of data from the topside location. At the topside location, for transmitting data to the subsea location, a digital signal TX1 can cause switch 3 to operate via an amplifier 9 alternately to connect and disconnect in a predetermined manner the voltage from supply 1 to conductor 5, in which condition switch 4 connects conductor 5 to an existing power line 10 in umbilical 6 (see Fig. 1). At the subsea location, for transmitting data to the topside location, a digital signal TX2 can cause switch 4 to operate via an amplifier 11 to alternately connect and disconnect in a predetermined manner the voltage from supply 2 to conductor 5, in which condition switch 3 is connected to the power line 10 (see Fig. 2). At the topside location, the connection to power line 10 is at a potential of Vpower-top and at the subsea end the sea connection is at a potential of Vpower-sub.

In Fig. 1, communication of data is from the topside location to the subsea location in dependence on the operation of switch 3 and in Fig. 2, communication of data is from the subsea location to the topside location in dependence on the operation of switch 4, in each case the communication return path is via the power line 10.

When transmitting data from the topside location to the subsea location (Fig. 1), the received signal being RX1, VCC-TOP must be large enough to compensate for the voltage drop along the conductor 5 of the umbilical 6 (Vumbilical-drop).

e.g.

$$\text{VCC-TOP} = \text{Vumbilical-drop} + \text{V digital-offset,}$$

where:

$$\text{Vdigital-offset} = \text{Min} \left[ \text{Abs}(\text{Vpower-top} - \text{Vpower-sub}) + \text{Vdigital} \right]$$

Vdigital is recommended to be at least 24 volts.

Thus, the subsea transmitted signal is as follows:

-    Logic 1: voltage drop across resistor Rsub when switch 3 is connected to supply 1 (approx Vdigital)

- Logic 0: voltage drop across resistor Rsub when switch 3 is connected to the power line 10 (approx 0 volts)

When transmitting data from the subsea location to the topside location (Fig. 2), the received signal being RX2, similar conditions as per the above supply to VCC-SUB.

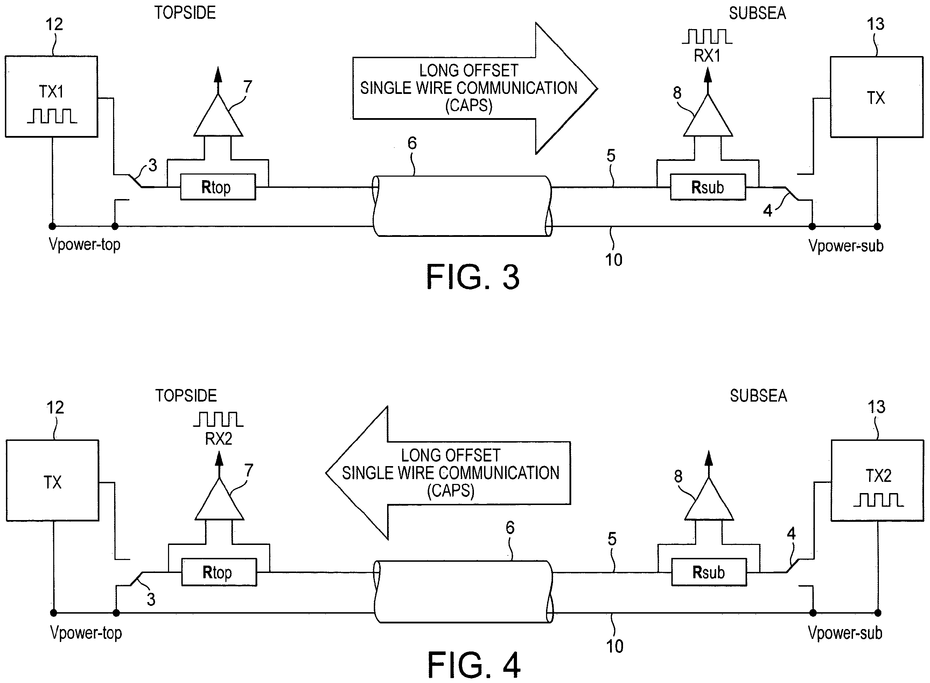

Referring to Figs. 3 and 4, in which items which correspond with those in Figs. 1 and 2 have the same reference numerals as in Figs. 1 and 2, reference numerals 12 and 13 designate digital data supplies at the topside and subsea locations respectively. For transmitting data from the topside location to the subsea location, switch 3 is connected to supply 1 and switch 4 is connected to the power line 10 (Fig. 3); and for transmitting data from the subsea location to the topside location, switch 4 is connected to supply 2 and switch 3 is connected to the power line 10 (Fig. 4).

As with Figs. 1 and 2, the communication of data from the topside location to the subsea location and vice-versa is via conductor 5 with the return path via the power line 10. The DC level of the digital signals supplied by supplies 12 and 13 should meet the conditions set out above with reference to Figs. 1 and 2 for VCC-TOP and VCC-SUB.

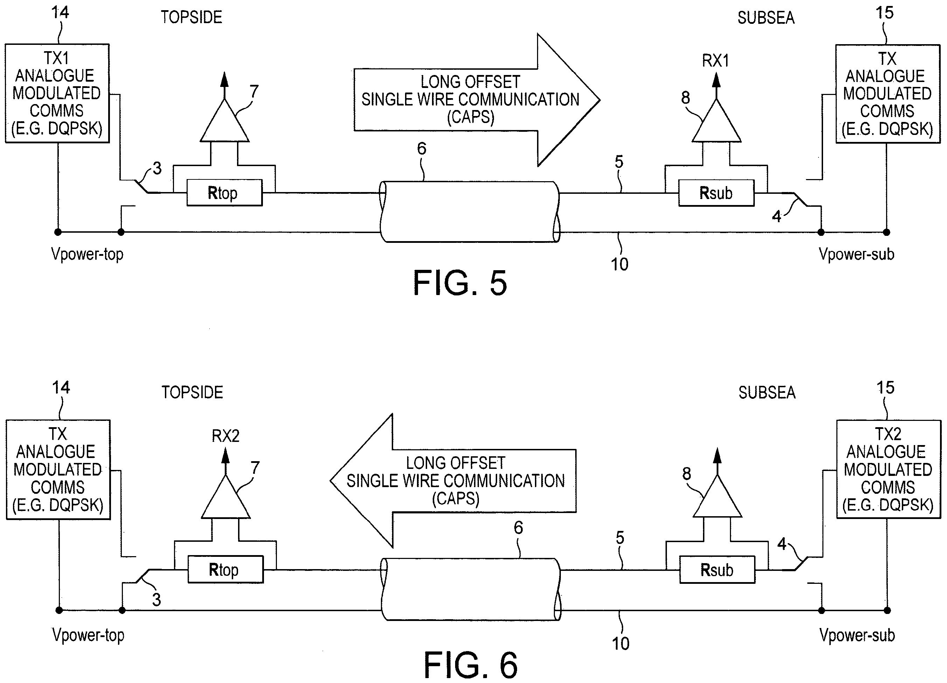

Figs. 5 and 6 illustrate an alternative to the embodiment of Figs. 3 and 4 in which supplies 12 and 13 are replaced by analogue modulated communication supplies 14 and 15 at the topside and subsea locations respectively, for example supplying analogue signals digitally encoded, such as by differential quadrature phase shift keying (DQSPK).

Advantages of using the Invention

The key advantage of this invention is the substantial reduction in the umbilical costs by the reduction of conductors.


**Claims**

1.   A communication arrangement for a subsea well control system, comprising an umbilical (6) between a topside location and a subsea location, an electrical conductor (5) in said umbilical and means (1, 3, 4, 7, 8, 9, 11-15) for transmitting and receiving data between said locations via said conductor, wherein said conductor does not carry power in operation of the arrangement and a return path for said data comprises a power line (10) in said umbilical.

2.   An arrangement according to claim 1, wherein said means for transmitting and receiving data comprises:

  first data supply means (1, 9 or 12 or 14), at said topside location;
  second data supply means (2, 11 or 13 or 15), at said subsea location;
  first data receiving means (7), at said topside location, for receiving data from said second data supply means via said umbilical (6); and
  second data receiving means (8), at said subsea location, for receiving data from said first data supply means via said umbilical.

3.   An arrangement according to claim 2, comprising first switching means (3), at said topside location, and second switching means (4), at said subsea location, the arrangement being such that, when said first data supply means (1, 9 or 12, 14) transmits data to said second data receiving means (8), said second switching means connects said conductor (5) to said power line (10) and, when said second data supply means (2, 11 or 13 or 15) transmits data to said first data receiving means (7), said first switching means connects said conductor to said power line.

4.   An arrangement according to claim 3, wherein:

  said first data supply means comprises a first direct current source (1) and means (9) for alternately switching said first switching means (3) between a position in which it connects said first source to said conductor (5) and a position in which it connects said conductor to said power line (10), in dependence on the data to be transmitted to the second receiving means (8); and
  said second data supply means comprises a second direct current source (2) and means (11) for alternately switching said second switching means (4) between a position in which it connects said second source to said conductor and a position in which it connects said conductor to said power line, in dependence on the data to be transmitted to the first receiving means (7).

5.   An arrangement according to claim 3, wherein said first data supply means comprises a first data source (12 or 14) and said second data supply means comprises a second data source (13 or 15), the arrangement being such that said first switching means (3) connects said first source to said conductor (5) for transmitting data to said second receiving means (8) and said second switching means (4) connects said second source to said conductor for transmitting data to said first receiving means (7).

6. An arrangement according to claim 5, wherein each of said first and second sources (12, 13) comprises a source of digital data.

7. An arrangement according to claim 5, wherein each of said first and second sources (14, 15) comprises a source of modulated analogue data.

8. A method of communication in a subsea well control system which comprises an umbilical (6) between a topside location and a subsea location and an electrical conductor (5) in said umbilical, said conductor not carrying power, the method comprising using means (1, 3, 4, 7, 8, 9, 11-15) for transmitting and receiving data to transmit data between said locations via said conductor and using a power line (10) in said umbilical as a return path for said data.

9. A method according to claim 8, wherein said means for transmitting and receiving data comprises:

first data supply means (1, 9 or 12 or 14), at said topside location;
second data supply means (2, 11 or 13 or 15), at said subsea location;
first data receiving means (7), at said topside location, for receiving data from said second data supply means via said umbilical (6); and
second data receiving means (8), at said subsea location, for receiving data from said first data supply means via said umbilical.

10. A method according to claim 9, wherein the system comprises first switching means (3), at said topside location, and second switching means (4), at said subsea location, the method being such that, when said first data supply means (1, 9 or 12, 14) transmits data to said second data receiving means (8), said second switching means connects said conductor (5) to said power line (10) and, when said second data supply means (2, 11 or 13 or 15) transmits data to said first data receiving means, said first switching means connects said conductor to said power line.

11. A method according to claim 10, wherein:

said first data supply means comprises a first direct current source (1), the method comprising alternately switching said first switching means (3) between a position in which it connects said first source to said conductor (5) and a position in which it connects said conductor to said power line (10), in dependence on the data to be transmitted to the second receiving means (8); and
said second data supply means comprises a second direct current source (2), the method comprising alternately switching said second switching means (4) between a position in which it connects said second source to said conductor and a position in which it connects said conductor to said power line, in dependence on the data to be transmitted to the first receiving means (7).

12. A method according to claim 10, wherein said first data supply means comprises a first data source (12 or 14) and said second data supply means comprises a second data source (13 or 15), the method being such that said first switching means (3) connects said first source to said conductor (5) for transmitting data to said second receiving means (8) and said second switching means (4) connects said second source to said conductor for transmitting data to said first receiving means (7).

13. A method according to claim 12, wherein each of said first and second sources (12, 13) comprises a source of digital data.

14. A method according to claim 12, wherein each of said first and second sources (14, 15) comprises a source of modulated analogue data.

**Patentansprüche**

1. Kommunikationsanordnung für ein Unterwasserbohrlochsteuersystem, umfassend eine Versorgung (6) zwischen einem oberseitigen Standort und einem Unterwasserstandort, einen elektrischen Leiter (5) in der Versorgung und ein Mittel (1, 3, 4, 7, 8, 9, 11-15) zum Übertragen und Empfangen von Daten zwischen den Standorten über den Leiter, wobei der Leiter beim Betreiben der Anordnung keinen Strom führt und eine Rückleitung für die Daten eine Stromleitung (10) in der Versorgung umfasst.

2. Anordnung nach Anspruch 1, wobei das Mittel zum Übertragen und Empfangen von Daten Folgendes umfasst:

ein erstes Datenversorgungsmittel (1, 9 oder 12 oder 14) am oberseitigen Standort;
ein zweites Datenversorgungsmittel (2, 11 oder 13 oder 15) am Unterwasserstandort;
ein erstes Datenempfangsmittel (7) am oberseitigen Standort zum Empfangen von Daten von dem zweiten Datenversorgungsmittel über die Versorgung (6); und
ein zweites Datenempfangsmittel (8) am Unterwasserstandort zum Empfangen von Daten von dem ersten Datenversorgungsmittel über die Versorgung.

3. Anordnung nach Anspruch 2, umfassend ein erstes Schaltmittel (3) am oberseitigen Standort und ein zweites Schaltmittel (4) am Unterwasserstandort, wobei die Anordnung derart gestaltet ist, dass, wenn das erste Datenversorgungsmittel (1, 9 oder 12, 14) Daten an das zweite Datenempfangsmittel (8) überträgt, das zweite Schaltmittel den Leiter (5) mit der Stromleitung (10) verbindet und, wenn das zweite Datenversorgungsmittel (2, 11 oder 13 oder 15) Daten an das erste Datenempfangsmittel (7) überträgt, das erste Schaltmittel den Leiter mit der Stromleitung verbindet.

4. Anordnung nach Anspruch 3, wobei:

das erste Datenversorgungsmittel eine erste Gleichstromquelle (1) und ein Mittel (9) zum abwechselnden Schalten des ersten Schaltmittels (3) zwischen einer Position, in der es die erste Quelle mit dem Leiter (5) verbindet, und einer Position, in der es den Leiter mit der Stromleitung (10) verbindet, abhängig von den an das zweite Empfangsmittel (8) zu übertragenden Daten umfasst; und
das zweite Datenversorgungsmittel eine zweite Gleichstromquelle (2) und ein Mittel (11) zum abwechselnden Schalten des zweiten Schaltmittels (4) zwischen einer Position, in der es die zweite Quelle mit dem Leiter verbindet, und einer Position, in der es den Leiter mit der Stromleitung verbindet, abhängig von den an das erste Empfangsmittel (7) zu übertragenden Daten umfasst.

5. Anordnung nach Anspruch 3, wobei das erste Datenversorgungsmittel eine erste Datenquelle (12 oder 14) umfasst und das zweite Datenversorgungsmittel eine zweite Datenquelle (13 oder 15) umfasst, wobei die Anordnung derart gestaltet ist, dass das erste Schaltmittel (3) die erste Quelle mit dem Leiter (5) verbindet, um Daten an das zweite Empfangsmittel (8) zu übertragen, und das zweite Schaltmittel (4) die zweite Quelle mit dem Leiter verbindet, um Daten an das erste Empfangsmittel (7) zu übertragen.

6. Anordnung nach Anspruch 5, wobei jede der ersten und der zweiten Quelle (12, 13) eine Quelle digitaler Daten umfasst.

7. Anordnung nach Anspruch 5, wobei jede der ersten und der zweiten Quelle (14, 15) eine Quelle modulierter Analogdaten umfasst.

8. Kommunikationsverfahren in einem Unterwasserbohrlochsteuersystem, das eine Versorgung (6) zwischen einem oberseitigen Standort und einem Unterwasserstandort und einen elektrischen Leiter (5) in der Versorgung umfasst, wobei der Leiter keinen Strom führt, wobei das Verfahren Verwendungsmittel (1, 3, 4, 7, 8, 9, 11-15) zum Übertragen und Empfangen von Daten, um Daten zwischen den Standorten über den Leiter zu übertragen, und zum Verwenden einer Stromleitung (10) in der Versorgung als eine Rückleitung für die Daten umfasst.

9. Verfahren nach Anspruch 8, wobei das Mittel zum Übertragen und Empfangen von Daten Folgendes umfasst:

ein erstes Datenversorgungsmittel (1, 9 oder 12 oder 14) am oberseitigen Standort;
ein zweites Datenversorgungsmittel (2, 11 oder 13 oder 15) am Unterwasserstandort;
ein erstes Datenempfangsmittel (7) am oberseitigen Standort zum Empfangen von Daten von dem zweiten Datenversorgungsmittel über die Versorgung (6); und
ein zweites Datenempfangsmittel (8) am Unterwasserstandort zum Empfangen von Daten von dem ersten Datenversorgungsmittel über die Versorgung.

10. Verfahren nach Anspruch 9, wobei das System ein erstes Schaltmittel (3) am oberseitigen Standort und ein zweites Schaltmittel (4) am Unterwasserstandort umfasst, wobei das Verfahren derart gestaltet ist, dass, wenn das erste Datenversorgungsmittel (1, 9 oder 12, 14) Daten an das zweite Datenempfangsmittel (8) überträgt, das zweite Schaltmittel den Leiter (5) mit der Stromleitung (10) verbindet und, wenn das zweite Datenversorgungsmittel (2, 11 oder 13 oder 15) Daten an das erste Datenempfangsmittel überträgt, das erste Schaltmittel den Leiter mit der Stromleitung verbindet.

11. Verfahren nach Anspruch 10, wobei:

das erste Datenversorgungsmittel eine erste Gleichstromquelle (1) umfasst, wobei das Verfahren Folgendes umfasst: abwechselndes Schalten des ersten Schaltmittels (3) zwischen einer Position, in der es die erste Quelle mit dem Leiter (5) verbindet, und einer Position, in der es den Leiter mit der Stromleitung (10) verbindet, abhängig von den an das zweite Empfangsmittel (8) zu übertragenden Daten; und

das zweite Datenversorgungsmittel eine zweite Gleichstromquelle (2) umfasst, wobei das Verfahren Folgendes umfasst: abwechselndes Schalten des zweiten Schaltmittels (4) zwischen einer Position, in der es die zweite Quelle mit dem Leiter verbindet, und einer Position, in der es den Leiter mit der Stromleitung verbindet, abhängig von den an das erste Empfangsmittel (7) zu übertragenden Daten.

12. Verfahren nach Anspruch 10, wobei das erste Datenversorgungsmittel eine erste Datenquelle (12 oder 14) umfasst und das zweite Datenversorgungsmittel eine zweite Datenquelle (13 oder 15) umfasst, wobei das Verfahren derart gestaltet ist, dass das erste Schaltmittel (3) die erste Quelle mit dem Leiter (5) verbindet, um Daten an das zweite Empfangsmittel (8) zu übertragen, und das zweite Schaltmittel (4) die zweite Quelle mit dem Leiter verbindet, um Daten an das erste Empfangsmittel (7) zu übertragen.

13. Verfahren nach Anspruch 12, wobei jede der ersten und der zweiten Quelle (12, 13) eine Quelle digitaler Daten umfasst.

14. Verfahren nach Anspruch 12, wobei jede der ersten und der zweiten Quelle (14, 15) eine Quelle modulierter Analogdaten umfasst.

**Revendications**

1. Agencement de communication pour un système de commande de puits sous-marin, comprenant un ombilical (6) entre un emplacement en surface et un emplacement sous-marin, un conducteur électrique (5) dans ledit ombilical et des moyens (1, 3, 4, 7, 8, 9, 11 à 15) pour transmettre et recevoir des données entre lesdits emplacements par l'intermédiaire dudit conducteur, dans lequel ledit conducteur n'achemine pas l'électricité lors du fonctionnement de l'agencement et un chemin de retour pour lesdites données comprend une ligne électrique (10) dans ledit ombilical.

2. Agencement selon la revendication 1, dans lequel lesdits moyens pour transmettre et recevoir des données comprennent :

des premiers moyens de fourniture de données (1, 9 ou 12 ou 14), au niveau dudit emplacement en surface ;
des seconds moyens de fourniture de données (2, 11 ou 13 ou 15), au niveau dudit emplacement sous-marin ;
des premiers moyens de réception de données (7), au niveau dudit emplacement en surface, pour recevoir des données à partir desdits seconds moyens de fourniture de données par l'intermédiaire dudit ombilical (6) ; et
des seconds moyens de réception de données (8), au niveau dudit emplacement sous-marin, pour recevoir des données à partir desdits premiers moyens de fourniture de données par l'intermédiaire dudit ombilical.

3. Agencement selon la revendication 2, comprenant des premiers moyens de commutation (3), au niveau dudit emplacement en surface, et des seconds moyens de commutation (4), au niveau dudit emplacement sous-marin, l'agencement étant tel que, lorsque lesdits premiers moyens de fourniture de données (1, 9 ou 12, 14) transmettent des données vers lesdits seconds moyens de réception de données (8), lesdits seconds moyens de commutation connectent ledit conducteur (5) à ladite ligne électrique (10) et, lorsque lesdits seconds moyens de fourniture de données (2, 11 ou 13 ou 15) transmettent des données vers lesdits premiers moyens de réception de données (7), lesdits premiers moyens de commutation connectent ledit conducteur à ladite ligne électrique.

4. Agencement selon la revendication 3, dans lequel :

lesdits premiers moyens de fourniture de données comprennent une première source de courant continu (1) et des moyens (9) pour faire commuter en alternance lesdits premiers moyens de commutation (3) entre une position dans laquelle ils connectent ladite première source audit conducteur (5) et une position dans laquelle ils connectent ledit conducteur à ladite ligne électrique (10), en fonction des données à transmettre aux seconds moyens de réception (8) ; et

lesdits seconds moyens de fourniture de données comprennent une seconde source de courant continu (2) et des moyens (11) pour faire commuter en alternance lesdits seconds moyens de commutation (4) entre une position dans laquelle ils connectent ladite seconde source audit conducteur et une position dans laquelle ils connectent ledit conducteur à ladite ligne électrique, en fonction des données à transmettre aux premiers moyens de réception (7).

5. Agencement selon la revendication 3, dans lequel lesdits premiers moyens de fourniture de données comprennent une première source de données (12 ou 14) et lesdits seconds moyens de fourniture de données comprennent une seconde source de données (13 ou 15), l'agencement étant tel que lesdits premiers moyens de commutation (3) connectent ladite première source audit conducteur (5) pour transmettre des données auxdits seconds moyens de réception (8) et lesdits seconds moyens de commutation (4) connectent ladite seconde source audit conducteur pour transmettre des données auxdits premiers moyens de réception (7).

6. Agencement selon la revendication 5, dans lequel chacune desdites première et seconde sources (12, 13) comprend une source de données numériques.

7. Agencement selon la revendication 5, dans lequel chacune desdites première et seconde sources (14, 15) comprend une source de données analogiques modulées.

8. Procédé de communication dans un système de commande de puits sous-marin qui comprend un ombilical (6) entre un emplacement en surface et un emplacement sous-marin et un conducteur électrique (5) dans ledit ombilical, ledit conducteur n'acheminant pas d'électricité, le procédé comprenant l'utilisation de moyens (1, 3, 4, 7, 8, 9, 11 à 15) pour transmettre et recevoir des données afin de transmettre des données entre lesdits emplacements par l'intermédiaire dudit conducteur, et l'utilisation d'une ligne électrique (10) dans ledit ombilical en tant que chemin de retour pour lesdites données.

9. Procédé selon la revendication 8, dans lequel lesdits moyens pour transmettre et recevoir des données comprennent :

   des premiers moyens de fourniture de données (1, 9 ou 12 ou 14), au niveau dudit emplacement en surface ;
   des seconds moyens de fourniture de données (2, 11 ou 13 ou 15), au niveau dudit emplacement sous-marin ;
   des premiers moyens de réception de données (7), au niveau dudit emplacement en surface, pour recevoir des données à partir desdits seconds moyens de fourniture de données par l'intermédiaire dudit ombilical (6) ; et
   des seconds moyens de réception de données (8), au niveau dudit emplacement sous-marin, pour recevoir des données à partir desdits premiers moyens de fourniture de données par l'intermédiaire dudit ombilical.

10. Procédé selon la revendication 9, dans lequel le système comprend des premiers moyens de commutation (3), au niveau dudit emplacement en surface, et des seconds moyens de commutation (4), au niveau dudit emplacement sous-marin, le procédé étant tel que, lorsque lesdits premiers moyens de fourniture de données (1, 9 ou 12, 14) transmettent des données auxdits seconds moyens de réception de données (8), lesdits seconds moyens de commutation connectent ledit conducteur (5) à ladite ligne électrique (10) et, lorsque lesdits seconds moyens de fourniture de données (2, 11 ou 13 ou 15) transmettent des données auxdits premiers moyens de réception de données, lesdits premiers moyens de commutation connectent ledit conducteur à ladite ligne électrique.

11. Procédé selon la revendication 10, dans lequel :

   lesdits premiers moyens de fourniture de données comprennent une première source de courant continu (1), le procédé comprenant la commutation en alternance desdits premiers moyens de commutation (3) entre une position dans laquelle ils connectent ladite première source audit conducteur (5) et une position dans laquelle ils connectent ledit conducteur à ladite ligne électrique (10), en fonction des données à transmettre aux seconds moyens de réception (8) ; et
   lesdits seconds moyens de fourniture de données comprennent une seconde source de courant continu (2), le procédé comprenant la commutation en alternance desdits seconds moyens de commutation (4) entre une position dans laquelle ils connectent ladite seconde source audit conducteur et une position dans laquelle ils connectent ledit conducteur à ladite ligne électrique, en fonction des données à transmettre aux premiers moyens de réception (7).

12. Procédé selon la revendication 10, dans lequel lesdits premiers moyens de fourniture de données comprennent une première source de données (12 ou 14) et lesdits seconds moyens de fourniture de données comprennent une seconde source de données (13 ou 15), le procédé étant tel que lesdits premiers moyens de commutation (3) connectent ladite première source audit conducteur (5) pour transmettre des données auxdits seconds moyens de réception (8), et lesdits seconds moyens de commutation (4) connectent ladite seconde source audit conducteur pour transmettre des données auxdits premiers moyens de réception (7).

13. Procédé selon la revendication 12, dans lequel chacune desdites première et seconde sources (12, 13) comprend une source de données numériques.

14. Procédé selon la revendication 12, dans lequel chacune desdites première et seconde sources (14, 15) comprend une source de données analogiques modulées.

FIG. 1

FIG. 2

EP 2 620 585 B1

FIG. 3

FIG. 4

EP 2 620 585 B1

EP 2 620 585 B1

14

TX1
ANALOGUE
MODULATED
COMMS
(E.G. DQPSK)

TOPSIDE

7

3

**R**top

LONG OFFSET
SINGLE WIRE COMMUNICATION
(CAPS)

6

Vpower-top

SUBSEA

15

RX1

8

5

**R**sub

4

10

TX
ANALOGUE
MODULATED
COMMS
(E.G. DQPSK)

Vpower-sub

# FIG. 5

14

TX
ANALOGUE
MODULATED
COMMS
(E.G. DQPSK)

TOPSIDE

RX2

7

**R**top

3

LONG OFFSET
SINGLE WIRE COMMUNICATION
(CAPS)

6

Vpower-top

SUBSEA

15

8

5

**R**sub

4

10

TX2
ANALOGUE
MODULATED
COMMS
(E.G. DQPSK)

Vpower-sub

# FIG. 6

**EP 2 620 585 B1**

**Patent documents cited in the description**

- US 2009140879 A1